(19) Europäisches Patentamt
European Patent Office
Office européen des brevets

(11) **EP 2 629 939 B1**

(12) # EUROPEAN PATENT SPECIFICATION

(45) Date of publication and mention
of the grant of the patent:
**13.03.2019 Bulletin 2019/11**

(51) Int Cl.:
**B25J 9/16** *(2006.01)*      **G06T 7/11** *(2017.01)*
**G06T 7/194** *(2017.01)*      **G06T 7/174** *(2017.01)*
**G06K 9/78** *(2006.01)*

(21) Application number: **11833918.3**

(22) Date of filing: **12.10.2011**

(86) International application number:
**PCT/FI2011/050884**

(87) International publication number:
**WO 2012/052614 (26.04.2012 Gazette 2012/17)**

(54) **METHOD FOR THE FILTERING OF TARGET OBJECT IMAGES IN A ROBOT SYSTEM**

VERFAHREN ZUR FILTERUNG VON ZIELOBJEKTBILDERN IN EINEM ROBOTERSYSTEM

PROCÉDÉ DE FILTRAGE D'IMAGES D'OBJETS CIBLES DANS UN SYSTÈME ROBOTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2010 FI 20106090**

(43) Date of publication of application:
**28.08.2013 Bulletin 2013/35**

(73) Proprietor: **Zenrobotics OY**
**00100 Helsinki (FI)**

(72) Inventor: **VALPOLA, Harri**
**FI-00560 Helsinki (FI)**

(74) Representative: **Papula Oy**
**P.O. Box 981**
**00101 Helsinki (FI)**

(56) References cited:
JP-A- 2006 007 390      US-A1- 2006 184 272
US-A1- 2008 310 677      US-A1- 2011 141 251

- **WELKE K. ET AL.: 'Autonomous acquisition of
visual multi-view object representations for
object recognition on a humanoid robot' 2010
IEEE INTERNATIONAL CONFERENCE ON
ROBOTICS AND AUTOMATION (ICRA) 03 May
2010 - 08 May 2010, ANCHORAGE, ALASKA, USA,
pages 2012 - 2019, XP031743263**

**Description**

**BACKGROUND OF THE INVENTION**

Field of the invention:

The present invention relates to systems and methods used for manipulating physical objects with a robot arm and a gripper. In particular, the present invention relates to a method for the filtering of target object images in a robot system.

Description of the Related Art:

Robot system may be used in the sorting and classification of a variety of physical objects such as manufacturing components, machine parts and material to be recycled. The sorting and classification requires that the physical objects may be recognized with sufficient probability. In applications such as recycling and waste management, it is important that the purity of a sorted group of objects is high, namely, that as few as possible objects of a wrong type end up in the sorted groups of objects.

In robot systems the recognition of physical objects to be moved or manipulated may comprise two stages. In the first stage a target object to be gripped using a gripper, claw or clamp or other similar device connected to a robot arm is recognized among a plurality of objects. In the second stage the target object has been gripped successfully and it may be inspected more closely. The inspection is usually performed using a plurality of sensors, which comprise typically, a camera or an infrared sensor. A camera may be connected to the robot arm or the gripper. The inspection may be performed against a blank or otherwise clean background that does not contain any objects that might interfere with the recognition process. In the environment, from where the target object is gripped, there are usually other objects that may even cover the object partially or in whole, thus making it difficult to recognize and classify the target object in its background environment. Such an environment may be called an unstructured arena.

In general, the problem of recognizing objects is commonly dealt with using pattern recognition algorithms, which search for objects in sensory data such as digital camera images. Such algorithms are an actively studied field. While there are many algorithms which can even recognize objects against an uneven background, pattern recognition algorithms generally work best when the background is both uniform and predetermined. Previously, objects of predetermined type have been searched from a clear operating area and they been selected from the operating area as recognized objects. Sets of actions can be performed on a selected object of a known type. The set of actions can be chosen based on the type of the object, for example placing different kinds of objects in different bins.

It is possible to move a target object using the robot arm to a uniform background so that the target object may be inspected with the sensor without the presence of interfering objects. However, the problem with this approach is that each potential object of interest for a sorting operation must be moved separately to a location where it may be viewed against the inspection background. This requires a lot of time and consumes a lot of energy due to the fact that the robot arm has to be moved frequently. Therefore, it would be beneficial to be able to avoid the step of moving a target object to specific inspection location.

Publication 2010 IEEE ICRA, 3 May 2010, pages 2012 - 2019 by Kai Welke Et Al discloses an arrangement for autonomous acquisition of object representations which allow recognition, localization and grasping of objects in the environment is a challenging task, which has shown to be difficult. The publication presents a systems for autonomous acquisition of visual object representations, which endows a humanoid robot with the ability to enrich its internal object representation and allows the realization of complex visual tasks.

US2008/310677 discloses A method and system for optically detecting an object within a field of view where detection is difficult because of background clutter within the field of view that obscures the object. A camera is panned with movement of the object to motion stabilize the object against the background clutter while taking a plurality of image frames of the object. A frame-by-frame analysis is performed to determine variances in the intensity of each pixel, over time, from the collected frames. From this analysis a variance image is constructed that includes an intensity variance value for each pixel. Pixels representing background clutter will typically vary considerably in intensity from frame to frame, while pixels making up the object will vary little or not at all. A binary threshold test is then applied to each variance value and the results are used to construct a final image. The final image may be a black and white image that clearly shows the object as a silhouette.

**SUMMARY OF THE INVENTION:**

The invention relates a method comprising: gripping an object with a gripper attached to a robot arm; capturing at least two source images of an area comprising the object; computing an average image of the at least two source images; computing a variance image of the at least two source images; forming a filtering image from the variance image; and obtaining a result image by masking the average image using the filtering image as a bitmask.

The invention relates also to an apparatus, comprising: means for controlling a gripper and a robot arm for gripping an object; means for obtaining at least two source images of an area comprising the object; means for computing an average image of the at least two source images; means for computing a variance image of the at least two source images; means for forming a filtering image from the variance image; and means for obtaining a result image by masking the average image using the filtering image as a bitmask.

The invention relates also to a computer program embodied on a computer readable medium, the computer program comprising code for controlling a processor to execute a method comprising: controlling a gripper and a robot arm for gripping an object; obtaining at least two source images of an area comprising the object with an image sensor; computing an average image of the at least two source images; computing a variance image of the at least two source images; forming a filtering image from the variance image; and obtaining a result image by masking the average image using the filtering image as a bitmask.

The invention relates also to a computer program product comprising: controlling a gripper and a robot arm for gripping an object; obtaining at least two source images of an area comprising the object with an image sensor; computing an average image of the at least two source images; computing a variance image of the at least two source images; forming a filtering image from the variance image; and obtaining a result image by masking the average image using the filtering image as a bitmask.

The invention relates also to an apparatus comprising a memory and at least one processor configured to control a gripper and a robot arm for gripping an object, to obtain at least two source images of an area comprising the object with an image sensor, to compute an average image of the at least two source images, to compute a variance image of the at least two source images, to form a filtering image from the variance image and to obtain a result image by masking the average image using the filtering image as a bitmask.

The invention relates also to a method, comprising: gripping an object with a gripper attached to a robot arm; capturing at least two source images comprising the object with an image sensor; recording a movement of the gripper during the capturing of the at least two source images; determining at least one first motion vector for a motion between the at least two source images based on the movement of the gripper recorded; dividing at least one of the at least two source images to a plurality of image areas; and determining at least one second motion vector based on a comparison of image data in the at least two source images, the at least one second motion vector representing the motion of an image area; and matching the at least one second motion vector with the at least one first motion vector, to obtain at least one image area for object classification.

The invention relates also to an apparatus, comprising: means for gripping an object with a gripper attached to a robot arm; means for capturing at least two source images comprising the object with an image sensor; means for recording a movement of the gripper during the capturing of the at least two source images;

means for determining at least one first motion vector for a motion between the at least two source images based on the movement of the gripper recorded; means for dividing at least one of the at least two source images to a plurality of image areas; and means for determining at least one second motion vector based on a comparison of image data in the at least two source images, the at least one second motion vector representing the motion of an image area; and means for matching the at least one second motion vector with the at least one first motion vector, to obtain at least one image area for object classification.

The invention relates also to a computer program product or a computer program, which is embodied on a computer readable medium. The computer program or computer program product comprises code for controlling a processor to execute a method comprising: gripping an object with a gripper attached to a robot arm; capturing at least two source images comprising the object; recording a movement of the gripper during the capturing of the at least two source images; determining at least one first motion vector for a motion between the at least two source images based on the movement of the gripper recorded; dividing at least one of the at least two source images to a plurality of image areas; and determining at least one second motion vector based on a comparison of image data in the at least two source images, the at least one second motion vector representing the motion of an image area; and matching the at least one second motion vector with the at least one first motion vector, to obtain at least one image area for object classification.

The invention relates also to a method or an apparatus configured to perform the method or a computer program comprising the method steps, the method comprising: gripping an object with a gripper, which is attached to a robot arm or mounted separately; capturing, using an image sensor, a plurality of source images of an area that comprise the object; selecting moving image elements from the plurality of source images based on correspondence with recorded motion of the gripper during capturing time of the plurality of source images; producing a result image using information on the selected moving information elements; and using the result image for classifying the gripped object. In one embodiment of the invention, the selecting of the moving image elements may comprise computing an average image of the at least two source images, computing a variance image of the at least two source images and forming a filtering image from the variance image. In one embodiment of the invention, the producing of the result image may comprise obtaining a result image by masking the average image using the filtering image as a bitmask. In one embodiment of the invention, the selecting of the moving image elements may comprise determining at least one first motion vector for a motion between the at least two source images based on the movement of the gripper recorded, dividing at least one of the at least two source images to a plurality of image areas, determining at least one second motion vector based on a comparison of image data in the at least two source images, the at least one second motion vector representing the motion of an image area and matching the at least one second motion vector with the at least one first motion vector.

In one embodiment of the invention, the image sensor is configured to move along the gripper, for example, the image sensor may be attached to the gripper or to the robot arm.

In one embodiment of the invention, the image sensor is positioned to a position which allows the obtaining of at least two source images of an area comprising the object while the object is being moved.

In one embodiment of the invention, the apparatus is configured to recognize an image of the gripper in the at least two source images. The apparatus computes at least one displacement for an image of the gripper between a first source image and a second source image and determines a mutual placement of the first source image and the second source image for at least the steps of computing an average image and computing a variance image based on the displacement. The displacement may be used to scroll the second source image to superimpose precisely the images of the gripped object in the first and the second source images. The actual image of the gripped object may be removed. The scrolling may be only logical and used only as a displacement delta value in the computation of the average and variance images.

In one embodiment of the invention, the apparatus determines a mutual placement of the at least two source images, the movement of which corresponds to a recorded movement of the gripper, for at least the steps of computing an average image and computing a variance image based on the displacement.

In one embodiment of the invention, the apparatus determines at least one moving area in the at least two source images, the movement of which corresponds to a recorded movement of the gripper and the apparatus filtering the at least one moving area from the at least two source images. The filtering may comprise setting the pixels in the areas to a predefined value such as zero or one. The moving area may be comprised in a block, a contour or a shape or it may be a single pixel.

In one embodiment of the invention, at least one movement vector corresponding to the movement of the gripper between subsequent two source images, among the at least two source images, is obtained from movement information recorded for the robot arm. In one embodiment of the invention, the movement vector may be obtained as translated in a mapping function between movements in the robot arm coordinates and image coordinates. The movement vector may be used together with block or pixel movement information obtained by comparing the subsequent two source images. Those block or pixels with motion vectors corresponding to the known motion of the gripper may be filtered from the at least two source images. In this way it may be possible to remove altogether moving background from the at least two source images and restrict only to objects moving with the gripper in the average and variance image computation steps. In example of a moving block is a Motion Picture Experts Group (MPEG) macroblock.

In one embodiment of the invention, at least one visual feature of the gripper is used to recognize the gripper in the at least two source images by the object recognizer entity in the apparatus. The movement of at least part of the gripper image within the at least two source images is used to obtain a motion vector for the gripper that indicates the magnitude and the direction of the motion of the gripper. The motion vector of the gripper is also the motion vector for the object gripped, at least part of the gripper object, due to the fact it is held by the gripper. It should be noted that in the case of a lengthy object, the object may have parts that shiver, flutter or lag behind in relation to the part being held in direct contact with the gripper. The motion vector may be used to scroll the at least two source images in a relation to one another that corresponds to the inverse vector of the motion vector of the gripper between respective two source images. The further procedures comprising at least computing an average image of the at least two source images, computing a variance image of the at least two source images, forming a filtering image from the variance image, and obtaining a result image by masking the average image using the filtering image as a bitmask may then be performed for the at least two source images that have been scrolled in proportion to the inverse vector of the motion vector.

In one embodiment of the invention, an arm controller entity in the apparatus detects a successful gripping of the object. The apparatus is connected to the gripper and the robot arm. In response to the detection, the arm controller entity indicates this to a camera control entity in the apparatus, which control the image sensor to capture the at least two source images. The camera control entity obtains the at least two captured source images to the apparatus from the image sensor.

In one embodiment of the invention, an object recognizer entity in the apparatus removes at least one image area from the result image that comprises visual features of at least one of the gripper and the robot arm.

In one embodiment of the invention, the object recognizer entity classifies the object in the result image based on at least one visual feature in the result image and instructs the arm control entity to cause the robot arm to move the object to a location corresponding to the classification.

In one embodiment of the invention, the step of computing a variance image comprises computing a variance of each respective pixel in the at least two source images; and setting the computed variance as the value of the respective pixel in the variance image.

In one embodiment of the invention by a variance image is meant an image that has for each pixel a value that is proportional to the variation of values in that pixel across the at least two source images. One way of measuring the variation of value in a pixel across the at least two source images is to compute the statistical variance.

In one embodiment of the invention, the step of forming a filtering image comprises setting each respective pixel to 1 in the filtering image for which the respective pixel in the variance image has a value below a predefined threshold value.

In one embodiment of the invention, the step of obtaining a result image comprises selecting each respective pixel to the result image from the average image only if the value of the respective pixel in the filtering image is 1. The filtering image may be understood as a two-dimensional bitmask that is used to enable the selection of pixels from the average image.

In one embodiment of the invention, the at least two images are taken against a background comprising other objects potentially interfering a recognition of the gripped object. The background of the object may be an unstructured arena, that is, an environment or generally a three-dimensional space, which is not predetermined in one or several of its characteristics, such as background color or geometry, and which can include, in addition to the objects of interest, other objects of unknown characteristics. For example, a pile of trash could constitute an unstructured arena, that is, an operating space of a robot. An unstructured arena can also change as time progresses. For example, as pieces of trash are removed from the pile, the pieces of trash can shuffle, move or collapse. New trash can also get added to the pile.

In one embodiment of the invention, the image sensor is at least one of a camera, an infrared camera and a laser scanner.

In one embodiment of the invention, the steps of computing an average image, computing a variance image and forming a filtering image are performed separately for each pixel color channel. In one embodiment of the invention, the at least two source images are converted to gray scale and the steps of computing an average image, computing a variance image and forming a filtering image are performed for the gray scale.

In one embodiment of the invention, the image sensor is attached to the gripper or forms a part of the gripper. The camera may also be attached to the end of the robot arm directly or via a shaft.

In one embodiment of the invention, the invention includes a robot arm controlled by a controlling unit and installed so that it can reach objects which reside in an unstructured arena.

In one embodiment of the invention, the system furthermore includes a gripper attached to the robot arm and controlled by the controlling unit. The gripper can, for example, be a device which grips objects by enclosing them, in a way resembling a hand or a claw.

In one embodiment of the invention, the system furthermore includes at least one sensor device which can be used to produce sensory data about the unstructured arena. One such sensor device can be, for example, a digital camera oriented to view the unstructured arena.

In one embodiment of the invention, the gripper includes sensors which can be used to measure whether the gripper is in contact with objects in the unstructured arena, for example when the gripper is moved and it collides against an object, or when an object is gripped.

In one embodiment of the invention, the success of the gripping operation is determined using data from sensors. If the grip is not successful, the robot arm is then moved to different location for another attempt.

In one embodiment of the invention, the system is further improved by utilizing learning systems, which may run in the apparatus.

In one embodiment of the invention, the computer program is stored on a computer readable medium. The computer readable medium may be a removable memory card, a removable memory module, a magnetic disk, an optical disk, a holographic memory or a magnetic tape. A removable memory module may be, for example, a USB memory stick, a PCMCIA card or a smart memory card.

The embodiments of the invention described hereinbefore may be used in any combination with each other. Several of the embodiments may be combined together to form a further embodiment of the invention. A method, a system, an apparatus, a computer program or a computer program product to which the invention is related may comprise at least one of the embodiments of the invention described hereinbefore.

The benefits of the invention are related to improved quality in the selection of objects from an operating space of a robot. The invention may also be used to simplify further target object recognition methods that are used, for example, recognize the shape or texture of a target object. The invention also reduces the movements required of a robot arm by avoiding the moving of an image to a blank background and thus may lead to reduced power consumption by a robot arm.

**BRIEF DESCRIPTION OF THE DRAWINGS:**

The accompanying drawings, which are included to provide a further understanding of the invention and constitute a part of this specification, illustrate embodiments of the invention and together with the description help to explain the principles of the invention. In the drawings:

Fig. 1 is a block diagram illustrating a robot system performing the filtering of target object images in one embodiment of the invention;
Fig. 2A is a block diagram illustrating the filtering of target object images in a robot system;
Fig. 2B is a block diagram illustrating the scrolling of target object images based on a motion vector of a gripper or robot arm in a robot system such as the robot system in one embodiment of the invention;

**Fig. 3** is a flow chart illustrating a method for the filtering of target object images in a robot system in one embodiment of the invention; and

**Fig. 4** is a flow chart illustrating a method for an object movement based object recognition method in a robot system in one embodiment of the invention.

## DETAILED DESCRIPTION OF THE EMBODIMENTS:

Reference will now be made in detail to the embodiments of the present invention, examples of which are illustrated in the accompanying drawings.

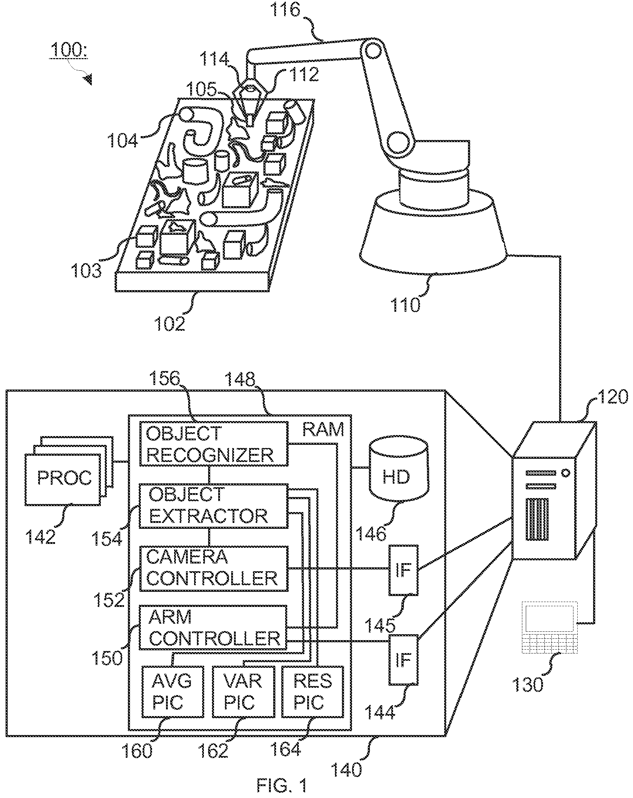

Figure 1 is a block diagram illustrating a robot system performing the filtering of target object images in one embodiment of the invention. In Figure 1 robot system 100 comprises is a robot 110, for example, an industrial robot comprising a robot arm 116. To robot arm 116 is connected a gripper 112, which may also be a clamp or a claw. Robot arm 116 is capable of moving gripper 112 within an operating area 102. Robot arm 116 may comprise a number of motors, for example, servo motors that enable the robot arms rotation, elevation and gripping to be controlled. Various movements of robot arm 116 and gripper 112 are effected by actuators. By way of example, the actuators can be electric, pneumatic or hydraulic, or any combination of these. The actuators may move or rotate various elements of robot 110. A set of electrical drivers may be used to convert data processing signals, in other words, instructions from apparatus 120 to appropriate voltage and power levels for controlling the actuators of robot arm 116. In response to control signals from the apparatus 120, the actuators perform various mechanical functions including but not necessarily limited to: positioning gripper 112 over a specific location within operating area 102, lowering or raising gripper 112, and closing and opening of gripper 112. Robot 110 may comprise various sensors. By way of example, the sensors comprise various position sensors (not shown) which indicate the position of robot arm 116 and gripper 112, as well as the open/close status of gripper 112. The open/close status of the gripper is not restricted to a simple yes/no bit. In one embodiment of the invention, gripper 112 may indicate a multi-bit open/close status in respect of each of its fingers, whereby an indication of the size and/or shape of the object(s) in the gripper may be obtained. In addition to the position sensors, the set of sensors may comprise strain sensors, also known as strain gauges or force feedback sensors, which indicate strain experienced by various elements of robot arm 116 and gripper 112. In an illustrative but non-restrictive implementation example, the strain sensors comprise variable resistances whose resistance varies depending on the tension of compression applied to them. Because the changes in resistance are small compared to the absolute value of the resistance, the variable resistances are typically measured in a Wheatstone bridge configuration.

To gripper 112 or to robot arm 116 there is connected a camera 114, which is directed to have in its visual field objects gripped by gripper 112, at least partly. In Figure 1 the camera is illustrated to be inside the gripper 112. The camera may also be located on a separate shaft connected to robot arm 116 and positioned so that objects gripped by gripper 112 are well in the visual field of camera 114. The camera may also be located in a remote position independent of robot arm 116. Robot 110 sorts objects contained in an unstructured arena 102, that is, in its operating arena. Arena 102 comprises a number of objects such as objects 103, 104 and 105. In Figure 1 it is shown that robot 110 has performed a gripping operation on target object 105 and holds it in gripper 112.

Robot 110 is connected to a data processing apparatus 120, in short an apparatus. The internal functions of apparatus 120 are illustrated with box 140. Apparatus 120 comprises at least one processor 142, a Random Access Memory (RAM) 148 and a hard disk 146. The one or more processors 142 control the robot arm by executing software entities 150, 152, 154 and 156. Apparatus 120 comprises also at least a camera peripheral interface 145 and a robot interface 144 to control robot 110. Peripheral interface 145 may be a bus, for example, a Universal Serial Bus (USB). To apparatus 120 is connected also a terminal 130, which comprises at least a display and a keyboard. Terminal 130 may be a laptop connected using a local area network to apparatus 120.

In order to communicate with external devices, such as robot 110, the apparatus 120 comprises or utilizes external reception/transmission circuitry such as robot interface 144, which comprises a transmission circuitry, reception circuitry and it may comprise an internal or external antenna (not shown). Apparatus 120 may utilize several different interfacing technologies for communicating with the physical world, which in the present example comprises robot 110, gripper 112 and camera 114. Wireless local-area networks (WLAN) and short-range wireless interfaces, such as infrared, radio or Bluetooth, are illustrative but non-restrictive examples of such wireless reception/transmission circuitry. Instead of such wireless communication technologies or in addition to them, the data processing apparatus may utilize wired connections, such as a USB, any parallel or serial interface, or other types of industry-standard interfaces or proprietary interfaces.

In additionally, the memory 140 of apparatus 120 contains a collection of programs or, generally, software entities that are executed by the at least one processor 142. There is an arm controller entity 150 which issues instructions via robot interface 144 to robot 110 in order to control the rotation, elevation and gripping of robot arm 116 and gripper 112. Arm controller entity 150 may also receive sensor data pertaining to the measured rotation, elevation and gripping of robot arm 116 and gripper 112. Arm controller may actuate the arm with new instructions issued based on feedback received to apparatus 120 via interface 144. Arm controller 150 is configured to issue instructions to robot 110 to perform well-defined high-level operations. An example of a high-level operation is moving the robot arm to a specified position. Arm controller 150 may utilize various software drivers, routines or dynamic link libraries to convert the high-level operation to a series of low-level operations, such as outputting an appropriate sequence of output signals via the electrical drivers to actuators of the robot 110. Camera controller entity 152 communicates with camera 114 using interface 145. Camera controller entity causes camera 114 to take a number of pictures at predefined time intervals starting at a moment in time instructed by camera controller entity 152. Generally, camera controller 152 may issue an instruction to camera 114 to take a picture at any moment in time. Camera controller entity 152 obtains the pictures taken by camera 114 via interface 145 and stores the pictures in memory 140. Object extractor entity 154 is configured to extract a target object from a predefined number of source pictures (not shown). In one embodiment of the invention, object extractor entity 154 uses the source pictures to compute an average image 160 and a variance image 162. In one embodiment of the invention, from the variance image 152 object extractor entity 154 computes a mask image (not shown), which is used to form a result picture 164 by masking average image 160 with a two-dimensional bitmap constituted by the mask image. The target object filtered from source pictures as it appears in result picture 164 is provided further to an object recognizer 156, which may perform further analysis on the target object based on various visual characteristics of the target object such as a shape, a color, a texture, a number of a Discrete Cosine Transformation (DCT) coefficients, a number of wavelet transformation coefficients, an MPEG macroblock and a contour. Object recognizer may also comprise information on the visual features of an image of gripper 112 and may use that information to remove parts of the gripper 112 visible in result picture 164 in order to produce an even better result picture for further analysis. Visual features of an image of gripper 112 may comprise at least one of a shape, a color, a texture, a number of a Discrete Cosine Transformation (DCT) coefficients, a number of wavelet transformation coefficients, an MPEG macroblock and contour. Based on results in target object recognition object recognizer 156 may classify the target object and instruct robot 110 via arm controller 150 to move the target object to a specific location that corresponds, for example, to a target bin.

The filtering performed by object extractor entity 154 is explained hereinafter in an exemplary embodiment. In one embodiment of the invention, in the view of camera 114, target object 105 is viewed against the background of the gripping environment 102. However, as the movement of robot arm 116 is known, either because it is a pre-determined operation or because the robot control system accurately measures it, the movement of gripper 112 and thus the movement of target object 105 in the camera image is known, while the background of the camera sensor view is moving in some different way. Target object 112 can then be more accurately recognized from the camera image by selecting from the image data only those areas which change in the way corresponding to the known movement of the robot arm. A simple example implementation of this has camera 114 attached to gripper 112. In such a configuration the objects moving with the gripper appear stationary in the camera image, while the background appears to be moving. The recognition of objects from the camera image data can be implemented in an "on-line" fashion. New camera images are received from camera as time progresses. Depending on the type of camera used, new camera images might be constructed as a result of the object recognition system requesting new image data from the camera, or the camera can construct new images at some rate internal to the camera and the object recognition system can then either request the latest image, which might be the same image as the one requested previously, or the object recognition system could receive an indication form the camera when new image data is available. As new images are received, the running average and variance of the pixel values in the new image and previously received images are calculated, which can be thought of forming two images, the average image and the variance image. The number of previously received images used can be set as a parameter to best suit the application at hand. When a sufficient number of camera images has been received and processed in this manner, a mask image is calculated by setting the pixel value to one in those pixels where the corresponding pixel in the variance image is smaller than a predefined threshold and zero otherwise. Then the average image is used to perform the object recognition, resulting in a feature image, which includes those pixels in the average image which are deemed to have some visual feature the object recognition system is set to recognize. For example, if the object recognition system is set to recognize red objects, the feature image would include those pixels from the average image which are deemed to be "red" by the object recognition system. Once the feature image has been calculated, a final image is calculated by masking the feature image with the mask image. This is accomplished by selecting from the feature image only those pixels for which the corresponding pixels in the mask image have the pixel value of 1. The part of the image corresponding to the gripped object is thus easily recognized from the final image. Once the part of the camera image data which corresponds to the gripped object has been recognized, the data can be used by the object recognition system to determine the type of the gripped object while the object is being moved. This new type information can then be used in combination with the previously determined type information to select the operation performed on the object.

When at least one processor executes functional entities associated with the invention, a memory comprises entities such as arm controller entity 150, camera controller entity 152, object extractor entity 154 and object recognizer entity 156. The functional entities within apparatus 120 illustrated in Figure 1 may be implemented in a variety of ways. They may be implemented as processes executed under the native operating system of the network node. The entities may be implemented as separate processes or threads or so that a number of different entities are implemented by means of one process or thread. A process or a thread may be the instance of a program block comprising a number of routines, that is, for example, procedures and functions. The functional entities may be implemented as separate computer programs or as a single computer program comprising several routines or functions implementing the entities. The program blocks are stored on at least one computer readable medium such as, for example, a memory circuit, memory card, magnetic or optic disk. Some functional entities may be implemented as program modules linked to another functional entity. The functional entities in Figure 1 may also be stored in separate memories and executed by separate processors, which communicate, for example, via a message bus or an internal network within the network node. An example of such a message bus is the Peripheral Component Interconnect (PCI) bus.

In one embodiment of the invention, software entities 150 - 156 may be implemented as separate software entities such as, for example, subroutines, processes, threads, methods, objects, modules and program code sequences. They may also be just logical functionalities within the software in apparatus 120, which have not been grouped to any specific separate subroutines, processes, threads, methods, objects, modules and program code sequences. Their functions may be spread throughout the software of apparatus 120. Some functions may be performed in the operating system of apparatus 120.

In an illustrative but non-restrictive example, unstructured arena 102 is a conveyor belt, or the portion of the conveyor belt that intersects the robot's operating area. Apparatus 120 has little or no a priori information on the objects 103, 104 and 105 within the unstructured arena 102, such as the size, shape and/or color of the objects of interest. In some embodiments of the invention, apparatus 120 may have some a priori information on the objects of interest, or it may have gained information on the objects by learning, but at least the background (other objects), the position and orientation of the objects of interest are typically unknown a priori. That is, objects 103, 104 and 105 may be in random positions and orientations in the unstructured arena 102, and the objects may overlap each other.

The embodiments of the invention described hereinbefore regarding Figure 1 may be used in any combination with each other. Several of the embodiments may be combined together to form a further embodiment of the invention.

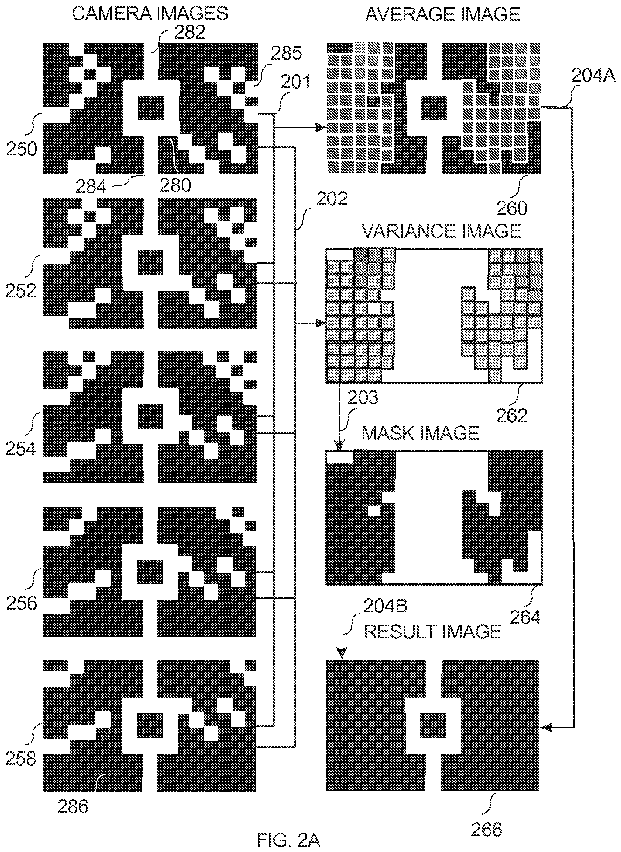

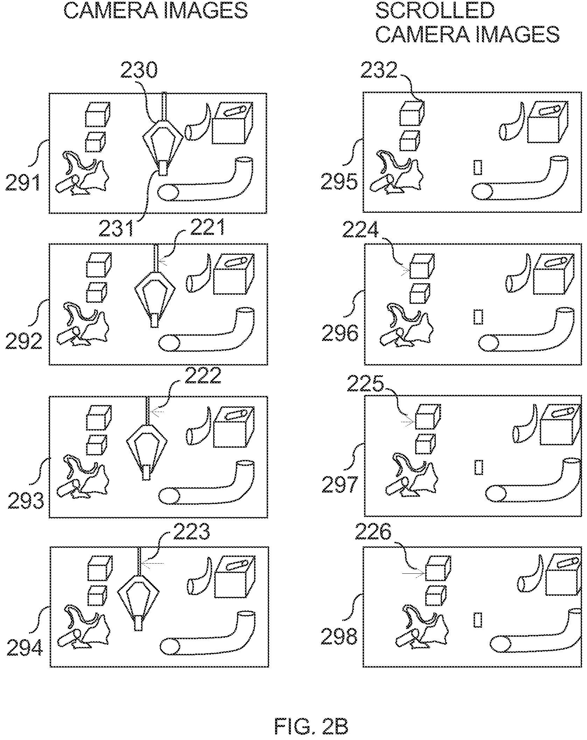

Figure 2A is a block diagram illustrating the filtering of target object images in one embodiment of the invention, in a robot system such as the robot system 100 illustrated in Figure 1. The starting point in Figure 2 is that gripper 112 connected to robot arm 116 has successfully gripped an object such as object 105 illustrated in Figure 1. Thereupon, robot arm 116 starts to move object 105 to a given direction. During the movement of the arm, camera 114 takes a sequence of five pictures, namely, camera images 250, 252, 254, 256 and 258, in this order. The successful gripping of object 105 and the starting of the movement of robot arm 116 may act as a trigger to start the taking of a sequence of camera images. The pictures are taken at predefined time intervals which may be, for example, 100 milliseconds to 5 seconds. For example, the time interval may be 0.5 seconds. Camera 114 is positioned so that object 105 fits in its visual field. Object 105 is visible in camera image 250 as box 280. Two fingers of the gripper 112 are visible in camera image 250 as rectangles 282 and 284. In camera image 250 there are visible also background objects such as object 285. The movement of robot arm is visible as changes in camera images 250 - 258 and it is illustrated with arrow 286. The direction is downwards in relation to background objects such as object 285. The speed is one pixel per picture, which totals a movement of four pixels in the image sequence consisting of camera images 250, 252, 254, 256 and 258. It should be noted that camera images illustrated in Figure 2 are highly simplified compared to real camera images. The camera images are illustrated to highlight the method of the invention.

As illustrated with arrows labeled 201, apparatus 120, for example, using object extractor entity 154, computes an average image 260 from camera images 250, 252, 254, 256 and 258. The formula for a given pixel value p at coordinates x,y in the average image is computed using $p_{(x,y)} = \dfrac{\sum\limits_{i=1}^{n} p_{i(x,y)}}{n}$ , wherein i is an index for camera images and n is the number of camera images. In the case of Figure 2 it is assumed that n = 5. The number n may have any integer value, for example, 3 < n < 20. The scales of gray in Figure 2 illustrate the pixel values computed.

As illustrated with arrows labeled 202, apparatus 120, for example, using object extractor entity 154, computes a variance image 262 from camera images 250, 252, 254, 256 and 258. The formula for a given pixel value p at coordinates x,y in the variance image is computed using

$$p_{(x,y)} = \frac{1}{n}\left(\sum_{i=1}^{n} p_{i(x,y)}^{2}\right) - \left(\frac{1}{n}\left(\sum_{i=1}^{n} p_{i(x,y)}\right)\right)^{2} ,$$

wherein i is an index for camera images and n is the number of camera images. The scales of gray in Figure 2 illustrate the pixel values computed.

In one embodiment of the invention, a separate average image and a separate variance image are formed for each color channel, that is, for example, for the R, G and B channels. In one embodiment of the invention, the camera images are converted to gray scale images and only single average and variance images are formed.

Thereupon, object extractor entity 154 computes a mask image 264 as illustrated with arrow 203. Mask image 264 is obtained by setting the pixel value at a given pixel $p_{(x,y)}$ to 1 in mask image 264, if the value of that pixel is below a predefined threshold. Otherwise the value at that pixel is set to 0.

Thereupon, object extractor entity 154 uses mask image 264 to remove from average image 260 those pixels $p_{(x,y)}$ that had value 0 at location x, y in mask image 264, as illustrated with arrows 204A and 204B. The pixels $p_{(x,y)}$ removed are set to zero in result image 266. Other respective pixels in result image 266 are set to the values of respective pixels obtained from average image 260. The result from the masking operation is stored as result image 266. Finally, object recognizer entity 156 may perform further processing for result image 266. For example, object recognizer entity 156 may remove visual features pertaining to the fingers of the gripper 112, based on the known texture of the gripper fingers.

Figure 2B is a block diagram illustrating the scrolling of target object images based on a motion vector of a gripper or a robot arm in a robot system such as the robot system 100 illustrated in Figure 1, in one embodiment of the invention.

In Figure 2B there is a camera mounted separately from the robot arm and the gripper to a position where it may capture a temporal sequence of camera images comprising at least camera images 291, 292, 293 and 294 of an object 231 being carried by a gripper such as gripper 112. The numerical order of reference numerals 291 - 294 indicates a possible order of the capturing of camera images 291 - 294. After the capturing of camera images 291 - 294, predefined information on at least one visual feature comprising at least one of a color, a texture, a number of a Discrete Cosine Transformation (DCT) coefficients, a number of wavelet transformation coefficients, an MPEG macroblock and a contour is used to recognize an image 230 of a gripper such as gripper 112 in camera images 291 - 294 by, for example, the object extractor entity 154 in apparatus 120. The movement of gripper image 230 within camera images 291 - 294 is used to obtain motion vectors 221, 222 and 223 for gripper image 230. Motion vectors 221 - 223 of gripper image 230 are also the motion vectors for gripped object 231, that is, at least part of object gripped 231, in one embodiment of the invention. It should be noted that in the case of a lengthy object, the object may have parts that shiver, flutter or lag behind. Motion vectors 221, 222 and 223 are used to obtain respective inverse motion vectors 224, 225 and 226. Gripper image 230 may be filtered from camera images 291 - 294 thereby maintaining only an image of gripped object 231. The filtering may use visual feature information stored in memory 140 used by object extractor entity 154 to remove areas matching with the visual feature information. Inverse motion vectors 224, 225 and 226 are used to scroll camera images 292, 293 and 294 to obtain respective scrolled camera images 296, 297 and 298. In the sequence of scrolled camera images 295 - 298 other objects such as object 232 appear to be moving while gripped object 231 appears stationary. It should be noted that, in one embodiment of the invention, scrolled camera images 295 - 298 may not actually be formed to memory 140, but the inverse motion vectors 224 - 226 may be used, for example, in the steps of computing an average image and computing a variance image as image displacement information, when reading pixel values from different camera images. In one embodiment of the invention, only an area corresponding to the intersection of the area of camera images 295 - 298 may be maintained. In one embodiment of the invention, camera images 295 - 298 may be amended with single valued pixels such as zero value pixels for the new image areas appearing due to the scrolling. The images may also be wrapped around instead. Therefore, a result equivalent to the case of a camera mounted to the gripper or the robot arm may be obtained for the subsequent calculations. Thereupon, the steps of computing an average image, computing a variance image and the forming of a filtering mask may ensue as described in association with in Figure 2A.

The embodiments of the invention described hereinbefore regarding Figures 2A and 2B may be used in any combination with each other. Several of the embodiments may be combined together to form a further embodiment of the invention.

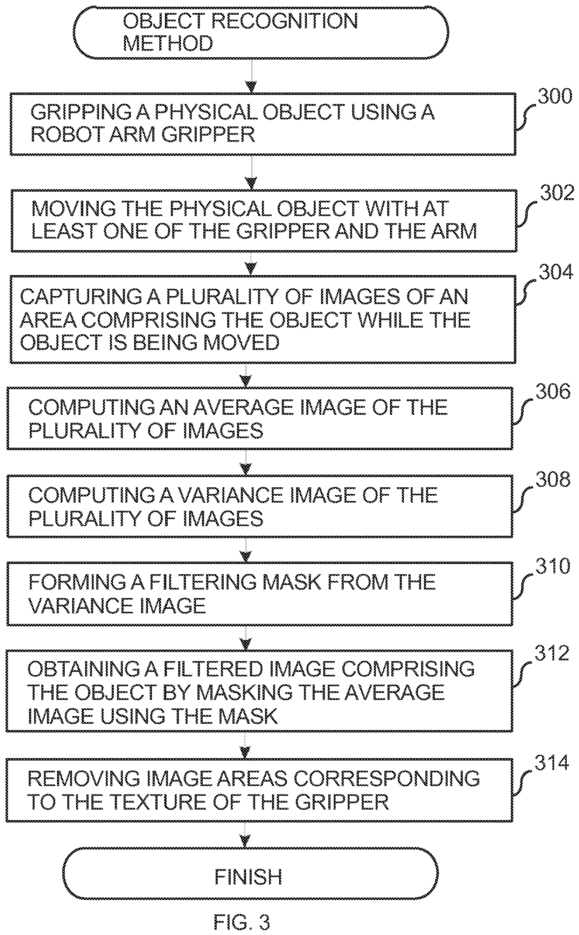

Figure 3 is a flow chart illustrating a method for the filtering of target object images in a robot system in one embodiment of the invention. The method may be applied in a robot system as illustrated in Figure 1.

At step 300, a physical target object is gripped using a gripper attached to a robot arm.

At step 302, the physical object in the gripper is moved with at least one of the gripper and the robot arm.

At step 304 a plurality of images are captured using a camera connected, for example, to the robot arm of the gripper. The camera may also be placed within a distance from the robot arm and the gripper. The images are captured while the target object is being moved. The target object may be moved over a background comprising a plurality of other objects that may be subjected to later handling by the robot arm or that may be ignored in classification. The movement of the robot arm may comprise an initial movement towards a possible destination for the target object such as a number of sorting bins or racks. The background may be an unstructured arena. The number of images may be, for example 4, 5, 10 or an arbitrary natural number greater than 1.

At step 306 an average image is computed of the plurality of images. The average image may be computed, for example, using the formula

$$p_{(x,y)} = \frac{\sum_{i=1}^{n} p_{i(x,y)}}{n} \, ,$$

wherein i is an index for camera images, n is the number of camera images and x,y are the pixel coordinates.

At step 308 a variance image is computed of the plurality of images. The variance image may be computed, for example, using the formula

$$p_{(x,y)} = \frac{1}{n}\left(\sum_{i=1}^{n} p_{i(x,y)}^{2}\right) - \left(\frac{1}{n}\left(\sum_{i=1}^{n} p_{i(x,y)}\right)\right)^{2} \, ,$$

wherein i is an index for camera images, n is the number of camera images and x,y are the coordinates of the pixel.

At step 310 a filtering mask image is formed from the variance image.

In one embodiment of the invention, the filtering mask image is obtained by setting the pixel value at a given pixel $p_{(x,y)}$ to 1 in the filtering mask image, if the value of that pixel is below a predefined threshold. Otherwise the value at that pixel is set to 0.

At step 312 a filtered image comprising the target object is obtained by masking the average image using the filtering mask.

In one embodiment of the invention, mask image is used to remove from average image those pixels $p_{(x,y)}$ that had value 0 at x,y in mask image. Those pixels $p_{(x,y)}$ are set to zero. The result from the masking operation is stored as the result image, that is, the filtered image. In other words, the filtering mask is a two-dimensional bitmask that is used together with the average image in an operation which returns a pixel value from the average image if the value of the corresponding pixel in the bitmask is 1. This may be formulated in the following formal manner:

$$\begin{cases} if \quad mask_{(x,y)} = 1 \Rightarrow result_{(x,y)} := avg_{(x,y)} \\ if \quad mask_{(x,y)} = 0 \Rightarrow result_{(x,y)} := 0 \end{cases} \, ,$$

wherein mask(x,y) represents a pixel in the mask image, result (x,y) represents a pixel in the result image and avg (x, y) represents a pixel in the average image. The symbol ":=" represents the value assignment operation.

In one embodiment of the invention, at step 314, image areas having the texture of the gripper or the robot arm are removed from the filtered image to thereby facilitate a better recognition, for example, of the shape of the target object. Thereupon, the method is finished.

In one embodiment of the invention, input data received from the camera is a digital image which consists of a 2-dimensional array of pixels, each pixel having a numerical value for the red, green and blue color component, hereinafter designated as the R-, G- and B-values, respectively. The number of pixels in data corresponds to the resolution of the camera.

In one embodiment of the invention, to decrease the amount of computations the image data received from the camera is down-sampled to a resolution determined suitable for analysis.

In one embodiment of the invention, the resulting down-sampled image is then normalized to account for changes in lightning conditions. The normalization may be done separately for each pixel in the down-sampled image.

In one embodiment of the invention, the apparatus is configured to recognize an image of the gripper in the at least two source images. The apparatus computes at least one displacement for an image of the gripper between a first source image and a second source image and determines a mutual placement of the first source image and the second source image for at least the steps of computing an average image and computing a variance image based on the displacement. The displacement may be used to scroll the second source image to superimpose precisely the images of the gripped object in the first and the second source images. The actual image of the gripped object may be removed. The scrolling may be only logical and used only as a displacement index or value in the computation of the average and variance images.

The embodiments of the invention described hereinbefore regarding Figure 3 may be used in any combination with each other. Several of the embodiments may be combined together to form a further embodiment of the invention. A method, a system, an apparatus, a computer program or a computer program product to which the invention is related may comprise at least one of the embodiments of the invention described hereinbefore.

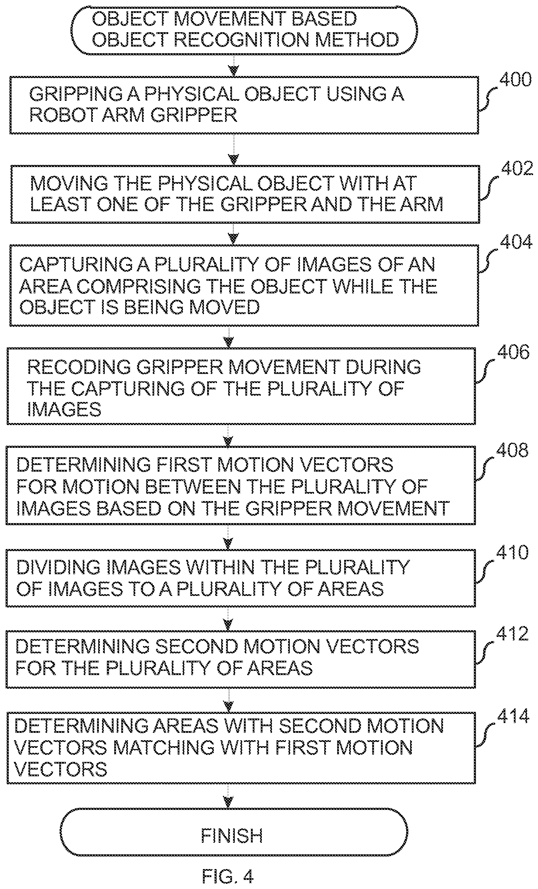

Figure 4 is a flow chart illustrating a method for an object movement based object recognition method in a robot system in one embodiment of the invention. The object movement used is determined using a known motion of a gripper or a robot arm holding the object to be recognized.

At step 400, the object to be recognized is gripped using a gripper attached to a robot arm.

At step 402, the object to be recognized is moved with at least one of the gripper and the robot arm.

At step 404 a plurality of images are captured using a camera connected, for example, to the robot arm or the gripper. The camera may also be stationary and view the movement of the gripper from a distance from the robot arm. The images are captured while the target object is being moved. The object to be recognized may be moved in relation to a background comprising a plurality of other objects that may be subjected to later handling by the robot arm or that may be ignored in classification. The movement of the robot arm may comprise an initial movement towards a possible destination for the object to be recognized such as a number of sorting bins or racks. The background may be an unstructured arena. The number of images may be, for example 4, 5, 10 or an arbitrary natural number greater than 1.

At step 406, the movement of the gripper is recorded during the capturing of the plurality of images. This step occurs naturally in parallel with the step 404. The movement is recorded, for example, using sensor data obtained from the robot arm. The sensor data may correspond to the change of the gripper position in real world coordinates. The change of the gripper position may be translated in a mapping function from real world coordinates to image coordinates, which represent the movement of the gripper within images captured with the camera such as the plurality of the images. The mapping function may be constructed using machine learning.

At step 408, at least one first motion vector for the motion between the plurality of images is determined based on the gripper movement recorded. The at least one first motion vector may represents the movement of the gripper in image coordinates, for example, in pixels between each subsequent captured image.

At step 410, at least one image in the plurality of images is divided to a plurality, for example, at least four areas. The areas may be pixels, blocks of pixels or areas of varying shape.

At step 412, at least one second motion vector is determined for at least one area based on a comparison of image data in subsequent images within the plurality of images. The comparison may comprise searching of visual features of an area of a first image from a second later image.

At step 414, the at least one second motion vector is matched with the at least one first motion vector. The comparison may concern the direction and length, that is, magnitude. If the comparison reveals that the directions and lengths of the vectors match within an error tolerance or the vectors are inverse vectors within an error tolerance. At least one area with a motion vector corresponding to the at least one first motion vector is selected. The error tolerance comprises error tolerance regarding the direction and length of the vectors.

In one embodiment of the invention, a selected area is removed from further processing or chosen for further processing. The areas for further processing area subjected to further object recognition steps.

In one embodiment of the invention, the selected areas are removed from the plurality of images. Thereupon, the steps of computing an average image, computing a variance image and the forming of filtering image may follow in a manner explained in association with these steps in Figure 3, indicated with reference numerals 306, 308 and 310, respectively. The removal may comprise the setting of pixel values to a predefined value such as zero or one.

In one embodiment of the invention, at least one selected area from an image among the plurality of images is used to obtain directly a result image. The result image may be used in the classification of the object to be recognized. There may be further recognition steps before the classification such as the removal of the gripper visual features from the result image.

The embodiments of the invention described hereinbefore regarding Figure 4 may be used in any combination with each other. Several of the embodiments may be combined together to form a further embodiment of the invention.

The exemplary embodiments of the invention can be included within any suitable device, for example, including any suitable servers, workstations, PCs, laptop computers, PDAs, Internet appliances, handheld devices, cellular telephones, wireless devices, other devices, and the like, capable of performing the processes of the exemplary embodiments, and which can communicate via one or more interface mechanisms, including, for example, Internet access, telecommunications in any suitable form (for instance, voice, modem, and the like), wireless communications media, one or more wireless communications networks, cellular communications networks, 3G communications networks, 4G communications networks, Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware art(s). For example, the functionality of one or more of the components of the exemplary embodiments can be implemented via one or more hardware devices.

The exemplary embodiments can store information relating to various processes described herein. This information can be stored in one or more memories, such as a hard disk, optical disk, magneto-optical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be implemented by the preparation of application-specific integrated circuits or by interconnecting an appropriate network of conventional component circuits, as will be appreciated by those skilled in the electrical art(s).

As stated above, the components of the exemplary embodiments can include computer readable medium or memories according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CDRW, DVD, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

It is obvious to a person skilled in the art that with the advancement of technology, the basic idea of the invention may be implemented in various ways. The invention and its embodiments are thus not limited to the examples described above; instead they may vary within the scope of the claims.

**Claims**

1. A method, comprising:

   gripping an object with a gripper attached to a robot arm;
   capturing (304) at least two source images of an area comprising the object with an image sensor while the object is being moved with the robot arm;
   computing (306) an average image of the at least two source images;
   **characterized in that**
   computing (308) a variance image of the at least two source images;
   forming (310) a filtering image from the variance image; and
   obtaining (312) a result image by masking the average image using the filtering image as a bitmask.

2. The method according to claim 1, the method further comprising:

   detecting (300, 302) a successful gripping of the object in an apparatus connected to the gripper and the robot arm;
   in response to the detection, instructing the image sensor to capture the at least two source images by an apparatus; and
obtaining (304) the at least two captured source images to the apparatus.

3. The method according to claim 1, the method further comprising:

   recognizing an image of the gripper in the at least two source images;
   computing (308) at least one displacement for an image of the gripper between a first source image and a second source image; and
   determining a mutual placement of the first source image and the second source image for at least the steps of computing an average image and computing a variance image based on the displacement.

4. The method according to claim 1, the method further comprising:
   determining a mutual placement of the at least two source images, the movement of which corresponds to a recorded movement of the gripper, for at least the steps of computing an average image and computing a variance image based on the displacement.

5. The method according to claim 1, the method further comprising:
   removing at least one image area from the result image that comprises visual texture of at least one of the gripper and the robot arm.

6. The method according to claim 1, the method further comprising:

   classifying the object in the result image based on at least one visual feature in the result image; and
   moving the object to a location corresponding to the classification.

7. The method according to claim 1, wherein the step of computing a variance image comprises:

   computing a variance of each respective pixel in the at least two source images; and
   setting the computed variance as the value of the respective pixel in the variance image.

8. The method according to claim 1, wherein the step of forming an filtering image comprises:
   setting each respective pixel to 1 in the filtering image for which the respective pixel in the variance image has a value below a predefined threshold.

9. The method according to claim 1, wherein the step of obtaining a result image comprises:

selecting each respective pixel to the result image from the average image only if the value of the respective pixel in the filtering image is 1.

10. The method according to claim 1, wherein the at least two images are taken against a background comprising, in addition to objects of interest, objects of unknown characteristics.

11. The method according to claim 1, wherein the image sensor is at least one of a camera, an infrared camera and a laser scanner.

12. The method according to claim 1, wherein the steps of computing an average image, computing a variance image and forming a filtering image are performed separately for each pixel color channel.

13. The method according to claim 1, wherein the image sensor is attached to the gripper and is configured to move along the gripper.

14. An apparatus, comprising:

  means (120) for controlling a gripper (112) and a robot arm (116) for gripping an object;
  means (152) for obtaining at least two source images of an area comprising the object with an image sensor while the object is being moved with the robot arm;
  means (142) for computing an average image of the at least two source images;
  **characterized in that**
  means (142) for computing a variance image of the at least two source images;
  means (142, 154) for forming a filtering image from the variance image; and
  means (142, 154) for obtaining a result image by masking the average image using the filtering image as a bitmask.

15. A computer program embodied on a computer readable medium, the computer program comprising code for controlling a processor to execute a method comprising:

  controlling a gripper and a robot arm for gripping an object;
  obtaining at least two source images of an area comprising the object with an image sensor while the object is being moved with the robot arm;
  computing an average image of the at least two source images;
  **characterized in that**
  computing a variance image of the at least two source images;
  forming a filtering image from the variance image; and
obtaining a result image by masking the average image using the filtering image as a bitmask.

16. The computer program according to claim 15, wherein said computer readable medium is a removable memory card, a holographic memory, a magnetic disk or an optical disk.

**Patentansprüche**

1. Verfahren, umfassend:

  Greifen eines Objekts mit einem an einem Roboterarm angebrachten Greifer;
  Aufnehmen (304) von zumindest zwei Quellbildern eines Bereichs, der das Objekt umfasst, mit einem Bildsensor, während das Objekt mit dem Roboterarm bewegt wird;
  Berechnen (306) eines Durchschnittsbildes der zumindest zwei Quellbilder;
  **Gekennzeichnet durch**
  Berechnen (308) eines Varianzbildes der zumindest zwei Quellbilder;
  Bilden (310) eines Filterbildes aus dem Varianzbild; und
  Ermitteln (312) eines Ergebnisbildes durch Maskieren des Durchschnittsbilds unter Verwendung des Filterbilds als einer Bitmaske.

2. Verfahren gemäß Anspruch 1, wobei das Verfahren weiter umfasst:

  Detektieren (300, 302) eines erfolgreichen Greifens des Objekts in einer mit dem Greifer und dem Roboterarm verbundenen Einrichtung;
  in Reaktion auf die Detektion, Anweisen des Bildsensors, die zumindest zwei Quellbilder durch eine Einrichtung aufzunehmen; und
  Ermitteln (304) der zumindest zwei aufgenommenen Quellbilder an die Einrichtung.

3. Verfahren gemäß Anspruch 1, wobei das Verfahren weiter umfasst:

  Erkennen eines Bildes des Greifers in den zumindest zwei Quellbildern;
  Berechnen (308) zumindest eines Versatzes für ein Bild des Greifers zwischen einem ersten Quellbild und einem zweiten Quellbild; und
  Bestimmen einer wechselseitigen Platzierung des ersten Quellbildes und des zweiten Quellbildes für zumindest die Schritte des Berechnens eines Durchschnittsbildes und Berechnen eines Varianzbildes, basierend auf dem Versatz.

**4.** Verfahren gemäß Anspruch 1, wobei das Verfahren weiter umfasst:

Bestimmen einer wechselseitigen Platzierung der zumindest zwei Quellbilder, deren Bewegung einer aufgezeichneten Bewegung des Greifers entspricht, zumindest für die Schritte des Berechnens eines Durchschnittsbildes und Berechnen eines Varianzbilds, basierend auf dem Versatzpunkt.

**5.** Verfahren gemäß Anspruch 1, wobei das Verfahren weiter umfasst:

Entfernen des zumindest einen Bildbereichs aus dem Ergebnisbild, das eine visuelle Textur des Greifers oder/und des Roboterarms umfasst.

**6.** Verfahren gemäß Anspruch 1, wobei das Verfahren weiter umfasst:

Klassifizieren des Objekts in dem Ergebnisbild, basierend auf dem zumindest einen visuellen Merkmal im Ergebnisbild; und Bewegen des Objekts zu einem der Klassifikation entsprechenden Ort.

**7.** Verfahren gemäß Anspruch 1, wobei der Schritt des Berechnens eines Varianzbilds umfasst:

Berechnen einer Varianz jedes entsprechenden Pixels in den zumindest zwei Quellbildern; und Einstellen der berechneten Varianz als den Weg des entsprechenden Pixels im Varianzbild.

**8.** Verfahren gemäß Anspruch 1, wobei der Schritt des Bildens eines Filterbildes umfasst:

Einstellen jedes entsprechenden Pixels auf 1 im Filterbild, für welches das entsprechende Pixel im Varianzbild einen Wert unter einem vorbestimmten Schwellenwert aufweist.

**9.** Verfahren gemäß Anspruch 1, wobei der Schritt des Ermittelns eines Ergebnisbildes umfasst:

Auswählen jedes entsprechenden Pixels zum Ergebnisbild aus dem Durchschnittsbild nur, falls der Wert des entsprechenden Pixels im Filterbild 1 beträgt.

**10.** Verfahren gemäß Anspruch 1, wobei die zumindest zwei Bilder gegen einen Hintergrund aufgenommen sind, der zusätzlich zu interessierenden Objekten Objekte unbekannter Charakteristika umfasst.

**11.** Verfahren gemäß Anspruch 1, wobei der Bildsensor eine Kamera, eine Infrarotkamera oder/und ein Laserscanner ist.

**12.** Verfahren gemäß Anspruch 1, wobei die Schritte des Berechnens eines Durchschnittsbilds, Berechnen eine Varianzbilds und Ausbilden eines Filterbilds getrennt für jeden Pixelfarbkanal durchgeführt werden.

**13.** Verfahren gemäß Anspruch 1, wobei der Bildsensor am Greifer angebracht ist und konfiguriert ist, sich längs dem Greifer zu bewegen.

**14.** Einrichtung, umfassend:

Mittel (120) zum Steuern eines Greifers (112) und eines Roboterarms (116) zum Greifen eines Objekts; Mittel (152) zum Erhalten von zumindest zwei Quellbildern eines Bereichs, der das Objekt umfasst, mit einem Bildsensor, während das Objekt mit dem Roboterarm bewegt wird; Mittel (142) zum Berechnen eines Durchschnittsbildes der zumindest zwei Quellbilder; **gekennzeichnet durch** Mittel (142) zum Berechnen eines Varianzbilds der zumindest zwei Quellbilder; Mittel (142, 154) zum Ausbilden eines Filterbildes aus dem Varianzbild; und Mittel (142, 154) zum Ermitteln eines Ergebnisbildes durch Maskieren des Durchschnittsbildes unter Verwendung des Filterbildes als einer Bitmaske.

**15.** Computerprogramm, das auf einem computerlesbaren Medium ausgeführt ist, wobei das Computerprogramm Code zum Steuern eines Prozessors umfasst, um ein Verfahren auszuführen, welches umfasst:

Steuern eines Greifers und eines Roboterarms zum Greifen eines Objekts; Ermitteln von zumindest zwei Quellbildern eines Bereichs, der das Objekt umfasst, mit einem Bildsensor, während das Objekt mit dem Roboterarm bewegt wird; Berechnen eines Durchschnittsbildes der zumindest zwei Quellbilder; **gekennzeichnet durch** Berechnen eines Varianzbildes der zumindest zwei Quellbilder; Ausbilden eines Filterbildes aus dem Varianzbild; und Ermitteln eines Ergebnisbilds durch Maskieren des Durchschnittsbildes unter Verwendung des Filterbildes als einer Bitmaske.

**16.** Computerprogramm gemäß Anspruch 15, wobei das computerlesbare Medium eine entnehmbare Speicherkarte, ein holographischer Speicher, eine Magnetplatte oder eine optische Platte ist.

**Revendications**

1. Procédé, comprenant les étapes consistant à :

   saisir un objet à l'aide d'un dispositif de préhension fixé à un bras de robot ;
   capturer (304) au moins deux images sources d'une zone comprenant l'objet à l'aide d'un capteur d'image tandis que l'objet est déplacé à l'aide du bras de robot ;
   calculer (306) une image moyenne des au moins deux images sources ;
   **caractérisé par** les étapes consistant à
   calculer (308) une image de variance des au moins deux images sources ;
   former (310) une image filtrante à partir de l'image de variance ; et
   obtenir (312) une image résultante en masquant l'image moyenne en utilisant l'image filtrante en tant que masque de bits.

2. Procédé selon la revendication 1, le procédé comprenant en outre les étapes consistant à :

   détecter (300, 302) une saisie réussie de l'objet dans un appareil connecté au dispositif de préhension et au bras de robot ;
   en réponse à la détection, ordonner au capteur d'image de capturer les au moins deux images sources par l'intermédiaire d'un appareil ; et
   obtenir (304) les au moins deux images sources capturées vers l'appareil.

3. Procédé selon la revendication 1, le procédé comprenant en outre les étapes consistant à :

   reconnaître une image du dispositif de préhension dans les au moins deux images sources ;
   calculer (308) au moins un déplacement pour une image du dispositif de préhension entre une première image source et une seconde image source ; et
   déterminer un placement mutuel de la première image source et de la seconde image source pour au moins les étapes consistant à calculer une image moyenne et à calculer une image de variance sur la base du déplacement.

4. Procédé selon la revendication 1, le procédé comprenant en outre :
   la détermination d'un placement mutuel des au moins deux images sources, dont le mouvement correspond à un mouvement enregistré du dispositif de préhension, pour au moins les étapes consistant à calculer une image moyenne et à calculer une image de variance sur la base du déplacement.

5. Procédé selon la revendication 1, le procédé comprenant en outre :
la suppression d'au moins une zone d'image à partir de l'image résultante qui comprend une texture visuelle d'au moins un parmi le dispositif de préhension et le bras de robot.

6. Procédé selon la revendication 1, le procédé comprenant en outre les étapes consistant à :

   classer l'objet dans l'image résultante sur la base d'au moins une caractéristique visuelle dans l'image résultante ; et
   déplacer l'objet vers un emplacement correspondant à la classification.

7. Procédé selon la revendication 1, dans lequel l'étape de calcul d'une image de variance comprend les étapes consistant à :

   calculer une variance de chaque pixel respectif dans les au moins deux images sources ; et
   régler la variance calculée en tant que valeur du pixel respectif dans l'image de variance.

8. Procédé selon la revendication 1, dans lequel l'étape de formation d'une image filtrante comprend :
   le réglage de chaque pixel respectif à 1 dans l'image filtrante pour lequel le pixel respectif dans l'image de variance a une valeur inférieure à un seuil prédéfini.

9. Procédé selon la revendication 1, dans lequel l'étape d'obtention d'une image résultante comprend :
   la sélection de chaque pixel respectif pour l'image résultante à partir de l'image moyenne uniquement si la valeur du pixel respectif dans l'image filtrante est 1.

10. Procédé selon la revendication 1, dans lequel les au moins deux images sont prises sur un fond comprenant, outre des objets d'intérêt, des objets de caractéristiques inconnues.

11. Procédé selon la revendication 1, dans lequel le capteur d'image est au moins un parmi un appareil photo, une caméra infrarouge et un scanner laser.

12. Procédé selon la revendication 1, dans lequel les étapes de calcul d'une image moyenne, de calcul d'une image de variance et de formation d'une image filtrante sont effectuées séparément pour chaque canal de couleur de pixel.

13. Procédé selon la revendication 1, dans lequel le capteur d'image est fixé au dispositif de préhension et est configuré pour se déplacer sur le dispositif de préhension.

14. Appareil comprenant :

des moyens (120) pour commander un dispositif de préhension (112) et un bras de robot (116) pour saisir un objet ;

des moyens (152) pour obtenir au moins deux images sources d'une zone comprenant l'objet à l'aide d'un capteur d'image tandis que l'objet est déplacé à l'aide du bras de robot ;

des moyens (142) pour calculer une image moyenne des au moins deux images sources ;

**caractérisé par**

des moyens (142) pour calculer une image de variance des au moins deux images sources ;

des moyens (142, 154) pour former une image filtrante à partir de l'image de variance ; et

des moyens (142, 154) pour obtenir une image résultante en masquant l'image moyenne en utilisant l'image filtrante en tant que masque de bits.

15. Programme informatique incorporé sur un support lisible par ordinateur, le programme d'ordinateur comprenant un code pour commander un processeur afin d'exécuter un procédé comprenant les étapes consistant à :

commander un dispositif de préhension et un bras de robot pour saisir un objet ;

obtenir au moins deux images sources d'une zone comprenant l'objet à l'aide d'un capteur d'image tandis l'objet est déplacé à l'aide du bras de robot ;

calculer une image moyenne des au moins deux images sources ;

**caractérisé par** les étapes consistant à

calculer une image de variance des au moins deux images sources ;

former une image filtrante à partir de l'image de variance ; et

obtenir une image résultante en masquant l'image moyenne en utilisant l'image filtrante en tant que masque de bits.

16. Programme informatique selon la revendication 15, dans lequel ledit support lisible par ordinateur est une carte mémoire amovible, une mémoire holographique, un disque magnétique ou un disque optique.

FIG. 1

FIG. 2A

CAMERA IMAGES

SCROLLED
CAMERA IMAGES

FIG. 2B

```
          ┌─────────────────────────┐
          │  OBJECT RECOGNITION     │
          │  METHOD                 │
          └─────────────────────────┘
                      ↓
   ┌──────────────────────────────────┐  300
   │ GRIPPING A PHYSICAL OBJECT USING A│
   │ ROBOT ARM GRIPPER                 │
   └──────────────────────────────────┘
                      ↓
   ┌──────────────────────────────────┐  302
   │ MOVING THE PHYSICAL OBJECT WITH AT│
   │ LEAST ONE OF THE GRIPPER AND THE ARM│
   └──────────────────────────────────┘
                      ↓
   ┌──────────────────────────────────┐  304
   │ CAPTURING A PLURALITY OF IMAGES OF AN│
   │ AREA COMPRISING THE OBJECT WHILE THE│
   │ OBJECT IS BEING MOVED             │
   └──────────────────────────────────┘
                      ↓
   ┌──────────────────────────────────┐  306
   │ COMPUTING AN AVERAGE IMAGE OF THE │
   │ PLURALITY OF IMAGES               │
   └──────────────────────────────────┘
                      ↓
   ┌──────────────────────────────────┐  308
   │ COMPUTING A VARIANCE IMAGE OF THE │
   │ PLURALITY OF IMAGES               │
   └──────────────────────────────────┘
                      ↓
   ┌──────────────────────────────────┐  310
   │ FORMING A FILTERING MASK FROM THE │
   │ VARIANCE IMAGE                    │
   └──────────────────────────────────┘
                      ↓
   ┌──────────────────────────────────┐  312
   │ OBTAINING A FILTERED IMAGE COMPRISING│
   │ THE OBJECT BY MASKING THE AVERAGE │
   │ IMAGE USING THE MASK              │
   └──────────────────────────────────┘
                      ↓
   ┌──────────────────────────────────┐  314
   │ REMOVING IMAGE AREAS CORRESPONDING│
   │ TO THE TEXTURE OF THE GRIPPER     │
   └──────────────────────────────────┘
                      ↓
          ┌─────────────────────────┐
          │        FINISH           │
          └─────────────────────────┘
```

FIG. 3

```
  ╭─────────────────────────────────────╮
  │      OBJECT MOVEMENT BASED          │
  │      OBJECT RECOGNITION METHOD      │
  ╰─────────────────────────────────────╯
                    │
  ┌─────────────────────────────────────┐  400
  │ GRIPPING A PHYSICAL OBJECT USING A  │
  │ ROBOT ARM GRIPPER                   │
  └─────────────────────────────────────┘
                    │
  ┌─────────────────────────────────────┐  402
  │ MOVING THE PHYSICAL OBJECT WITH AT  │
  │ LEAST ONE OF THE GRIPPER AND THE ARM│
  └─────────────────────────────────────┘
                    │
  ┌─────────────────────────────────────┐  404
  │ CAPTURING A PLURALITY OF IMAGES OF AN│
  │ AREA COMPRISING THE OBJECT WHILE THE │
  │ OBJECT IS BEING MOVED                │
  └─────────────────────────────────────┘
                    │
  ┌─────────────────────────────────────┐  406
  │ RECODING GRIPPER MOVEMENT DURING    │
  │ THE CAPTURING OF THE PLURALITY OF   │
  │ IMAGES                              │
  └─────────────────────────────────────┘
                    │
  ┌─────────────────────────────────────┐  408
  │ DETERMINING FIRST MOTION VECTORS    │
  │ FOR MOTION BETWEEN THE PLURALITY OF │
  │ IMAGES BASED ON THE GRIPPER MOVEMENT│
  └─────────────────────────────────────┘
                    │
  ┌─────────────────────────────────────┐  410
  │ DIVIDING IMAGES WITHIN THE PLURALITY│
  │ OF IMAGES TO A PLURALITY OF AREAS   │
  └─────────────────────────────────────┘
                    │
  ┌─────────────────────────────────────┐  412
  │ DETERMINING SECOND MOTION VECTORS   │
  │ FOR THE PLURALITY OF AREAS          │
  └─────────────────────────────────────┘
                    │
  ┌─────────────────────────────────────┐  414
  │ DETERMINING AREAS WITH SECOND MOTION│
  │ VECTORS MATCHING WITH FIRST MOTION  │
  │ VECTORS                             │
  └─────────────────────────────────────┘
                    │
         ╭───────────────────────╮
         │        FINISH         │
         ╰───────────────────────╯
```

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008310677 A